# EUROPÄISCHE PATENTSCHRIFT

(11) **EP 3 100 594 B1**
(45) Veröffentlichungstag und Bekanntmachung des Hinweises auf die Patenterteilung: **11.10.2017**
(21) Anmeldenummer: 15701975.3
(22) Anmeldetag: 30.01.2015
(51) Int. Cl.: H05B 37/02

(54) **SELBSTJUSTIERENDER SENSOR ZUM ERFASSEN DES TAGESLICHTS**
SELF-ADJUSTING SENSOR FOR SENSING DAYLIGHT
CAPTEUR À AJUSTEMENT AUTOMATIQUE SERVANT À DÉTECTER LA LUMIÈRE DU JOUR

(30) Priorität: 30.01.2014 DE 102014201652
(43) Veröffentlichungstag der Anmeldung: 07.12.2016
(73) Patentinhaber: Zumtobel Lighting GmbH, 6850 Dornbirn (AT)
(72) Erfinder: ZEIDLER, Gerd, 6912 Hörbranz (AT)
(74) Vertreter: Thun, Clemens
(86) Internationale Anmeldenummer: PCT/EP2015/051913
(87) Internationale Veröffentlichungsnummer: WO 2015/114085

(56) Entgegenhaltungen:
- US-A1- 2012 057 050

## Beschreibung

Die vorliegende Erfindung betrifft einen Lichtsensor zur Messung der Raumhelligkeit, insbesondere zum Erfassen des z.B. durch Fenster in einen Raum einfallendenden Tageslichts.

Eine moderne Gebäudebeleuchtung, insbesondere eine Beleuchtung von Büros bzw. Arbeitsplätzen stellt hohe Anforderungen an die gewählte Lichtlösung. Die Beleuchtung soll immer ausreichend zur Verfügung stehen, sich in das Gebäudekonzept nahtlos integrieren und einfach bedienbar sein. Gleichzeitig soll der Wartungsaufwand gering und der Stromverbrauch niedrig sein um Kosten zu sparen und die Umwelt zu schonen. Um diese Anforderungen erfüllen zu können, kommt oftmals eine sog. tageslichtabhängige Beleuchtungsteuerung zum Einsatz, bei der also das künstliche Licht auf das von außen in einen Raum einfallende Licht abgestimmt wird. Damit kann die Innenraumbeleuchtung über weite Strecken abhängig von der aktuellen Außenlichtsituation konstant gehalten werden, wobei die künstliche Beleuchtung immer nur dann benötigt wird, wenn nicht genügend Tageslicht zur Verfügung steht. Abgesehen davon, dass die Unterstützung durch das Tageslicht zu einer natürlicheren Beleuchtung und damit zu einem angenehmeren sog. Raumklima führt, kann mit Hilfe dieser Vorgehensweise auch Energie gespart werden.

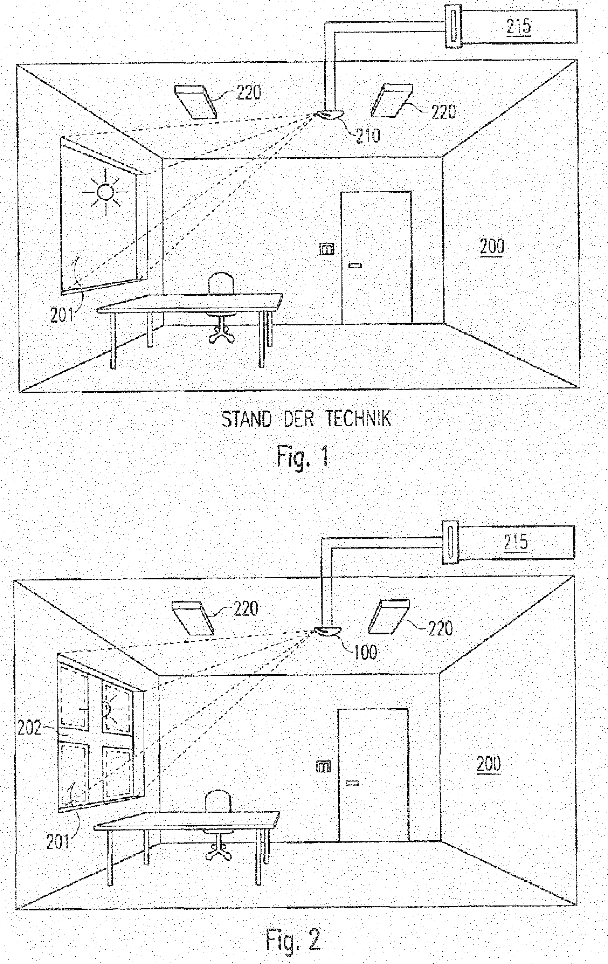

Eine aus dem Stand der Technik bekannte Lösung zur Realisierung einer tageslichtabhängigen Lichtsteuerung, die schematisch in Figur 1 dargestellt ist, beruht auf der Verwendung eines an der Decke eines zu beleuchtenden Raumes 200 montierten Lichtsensors 210, welcher auf eine Fensterfläche 201 gerichtet die Helligkeit der Außenlichtsituation misst. Auf Basis dieses Außenlichtmesswerts kann ein mit dem Sensor 210 verbundenes Steuergerät 215 die Raumleuchten 220 dann so dimmen, also in ihrer Helligkeit einstellen, dass die Beleuchtungsstärke in dem zu beleuchtenden Bereich etwa konstant bleibt. Derartige Lichtsensoren 210 arbeiten auf Basis einer speziell angepassten Photodiode, welche dem Helligkeits-Empfinden des menschlichen Auges angepasst ist.

Diese bekannte Lösung zur tageslichtabhängigen Lichtsteuerung funktioniert seit vielen Jahren zuverlässig und ist in vielen Gebäuden installiert. Trotz des unbestreitbaren Erfolges dieses Konzepts bestehen allerdings Bestrebungen, dieses weiter zu verbessern. Damit nämlich die aus dem Stand der Technik bekannten Lichtsensoren einen guten bzw. aussagekräftigen Messwert liefern, sind entsprechende Montagevorschriften genau einzuhalten. So dürfen sich beispielsweise in der optischen Achse bzw. im Messfeld des Sensors keine Störquellen, wie abgehängte Leuchten, Fensterstürze, Fensterkreuze oder Säulen befinden. Auch ein direkter Einfall des Sonnenlichts ist nicht zulässig, da es den Messwert verfälschen kann. Jalousien oder Abschattungen vor dem Fenster beeinflussen den Messwert hingegen nicht bzw. weniger negativ, solange diese Störquellen bei allen Fenstern des Raumes gleich auftreten. Dementsprechend muss also das auszuwertende Fenster repräsentativ für den Raum ausgewählt und der Lichtsensor exakt in der hierfür vorgesehenen Position angeordnet werden.

Die praktische Erfahrung aus der Vergangenheit hat gezeigt, dass die korrekte Montage des Lichtsensors ein Hauptproblem bei den aus dem Stand der Technik bekannten Lösungen darstellt. Oft wird das System in bestehende Gebäude nachträglich eingebaut, wobei die vorhandenen Verkabelungen meist nur bis zu den Leuchtmitteln reichen, welche für gewöhnlich im mittleren Bereich des Raumes montiert sind. Für einen Elektroinstallateur ist es relativ einfach die Signalleitungen für den Lichtsensor in die vorhandenen Installationsrohre nachzuziehen, allerdings ist es relativ aufwändig, neue Rohre zu verlegen. Aus diesem Grund wird der Lichtsensor oftmals dort angebracht, wo dies mit wenig Aufwand möglich ist, nicht jedoch dort, wo sich der Lichtsensor laut Installationsvorschrift tatsächlich befinden sollte. Das Signal des Lichtsensors kann dadurch nicht den korrekten Messwert liefern und die Beleuchtungssteuerung arbeitet nicht wie vorgesehen.

Darüber hinaus wäre es wünschenswert, Störquellen, die den Messwert des Sensors verfälschen, effizient aus dem Signal herauszufiltern zu können. Solche Störgrößen sind z.B. Kunstlichtquellen, Spiegelungen, Abschattungen oder kurzfristige Störungen wie am Fenster vorbeiziehende Passanten, Fahrzeuge oder kleine Wolken. US 2012/0057050 A1 offenbart eine Vorrichtung bzw. ein Verfahren gemäß der Präambel des Anspruchs 1 bzw. 7.

Der vorliegenden Erfindung liegt deshalb die Aufgabenstellung zugrunde, einen neuartigen Sensor zum Erfassen der Tageslichtsituation zur Verfügung zu stellen, der unabhängig von der Montagesituation möglichst selbständig das Signal an den korrekten Wert anpasst. Dabei sollte sich vorzugsweise der Sensor nahtlos in bereits bestehende Systeme integrieren lassen und idealerweise vorhandene Sensoren ersetzen können.

Die Aufgabe wird durch eine Sensoreinheit zum Ermitteln von Kontrollinformationen für die Verwendung in einer tageslichtabhängigen Lichtsteuerung mit den Merkmalen des Anspruchs 1 gelöst. Vorteilhafte Weiterbildungen der Erfindung sind Gegenstand der abhängigen Ansprüche.

Die erfindungsgemäße Lösung beruht zunächst auf dem Gedanken, zum Erfassen der Tageslichtsituation auf einen Bildsensor zurückzugreifen, mit dessen Hilfe digitale Bildinformationen erfasst werden können. Im Vergleich zu einem klassischen Lichtsensor, der nicht die Möglichkeit der Ortsauflösung bietet, erlaubt ein Bildsensor, eine Vielzahl von Informationen hinsichtlich des von dem Bildsensor erfassten räumlichen Bereichs zu gewinnen. Hierdurch wiederum besteht die Möglichkeit, bei der Bewertung der Helligkeitsinformationen diejenigen Bereiche des erfassten Bildes, die weniger Informationen hinsichtlich des Tageslichts beinhalten, auszublenden oder zumindest weniger stark zu berücksichtigen. Erfindungsgemäß ist hierzu ein Controller vorgesehen, der die von dem Bildsensor erfassten digitalen Bildinformationen auswertet und letztendlich ein das Tageslicht repräsentierendes Helligkeitssignal erstellt, wobei der Controller beim Erstellen des Helligkeitssignals Bildbereiche der von dem Bildsensor erfassten Bildinformationen, welche stärker durch das Tageslicht beeinflusst werden, stärker berücksichtigt.

Erfindungsgemäß wird deshalb eine Sensoreinheit zum Ermitteln von Kontrollinformationen für die Verwendung in einer tageslichtabhängigen Lichtsteuerung vorgeschlagen, wobei die Sensoreinheit einen Bildsensor zum Erfassen von digitalen Bildinformationen sowie einen Controller zum Auswerten der Bildinformationen und Erstellen eines das Tageslicht repräsentierenden Helligkeitssignals aufweist, und wobei der Controller dazu ausgebildet ist, beim Erstellen des Helligkeitssignals Bildbereiche der von dem Bildsensor erfassten Bildinformationen, welche stärker durch das Tageslicht beeinflusst werden, stärker zu berücksichtigen.

Die erfindungsgemäße Ausgestaltung der Sensoreinheit, insbesondere die spezielle Auswertung der Bildinformationen durch den Controller gestattet es, die Sensoreinheit freier innerhalb eines Raums zu montieren. Insbesondere müssen keine strengen Montageregeln eingehalten werden, die vorschreiben, dass der Bildsensor ausschließlich eine geeignete Fensterfläche erfasst. Stattdessen kann der Bildsensor nunmehr durchaus auch zusätzliche, störende Objekte erfassen, die allerdings bei dem Erstellen des Helligkeitssignals dann ignoriert oder zumindest weniger stark berücksichtigt werden. Hierdurch wird das Montieren der erfindungsgemäßen Sensoreinheit im Vergleich zu bislang bekannten Lösungen deutlich vereinfacht. Auf der anderen Seite gibt auch die erfindungsgemäße Sensoreinheit letztendlich lediglich ein einziges, das Tageslicht repräsentierendes Helligkeitssignal aus, ebenso wie ein klassischer Lichtsensor. Dies wiederum bedeutet, dass die erfindungsgemäße Einheit innerhalb eines bereits existierenden Beleuchtungssystems ohne Probleme einen klassischen Lichtsensor ersetzen und dessen Funktion übernehmen kann.

Ein besonderer Vorteil der erfindungsgemäßen Sensoreinheit besteht dabei darin, dass der Controller dazu ausgebildet ist, Bildbereiche, welche stärker durch das Tageslicht beeinflusst werden, selbstständig zu erkennen. Das Erstellen des Helligkeitssignals erfolgt dabei vorzugweise dadurch, dass Helligkeitsinformationen, insbesondere Helligkeitswerte einzelner Bildbereiche oder Pixel des von dem Bildsensor erfassten Bildes mit einem Gewichtungsfaktor multipliziert werden und dann ein diese gewichteten Helligkeitswerte insgesamt repräsentierender Wert, also z.B. ein Mittelwert oder die Summe hiervon berechnet wird. Der Controller ist dabei dazu ausgebildet, diese Gewichtungsfaktoren für die verschiedenen Bildbereiche bzw. Pixel selbstständig zu ermitteln und hierdurch automatisch Bereiche, die relevant hinsichtlich der Erfassung des Tageslichts sind, zu bevorzugen. Den anderen Bereichen hingegen, die nicht oder kaum durch das Tageslicht beeinflusst werden, werden automatisch durch den Controller kleinere Gewichtungsfaktoren zugewiesen, so dass sie zu dem letztendlich ausgegebenen Signal, welches das Tageslicht repräsentiert, nicht oder kaum beitragen.

Das Bestimmen der Gewichtungsfaktoren für die verschiedenen Bildbereiche erfolgt dabei vorzugsweise im Rahmen eines speziellen und durch die Sensoreinheit selbständig durchgeführten Optimierungsalgorithmus, wobei hierzu die Helligkeitsinformationen zeitlich nacheinander erfasster Bilder miteinander verglichen werden. Dieser Algorithmus basiert auf der Annahme, dass gleichartige Lichtanteile sich auch gleichartig verhalten. Hierunter wird verstanden, dass Bildbereiche, die durch das Tageslicht primär beeinflusst werden, mehr oder weniger dem Verlauf des Gesamttageslichts folgen, während hingegen Bildbereiche, welche in erster Linie mit Kunstlicht beaufschlagt sind, stattdessen eher dem zeitlichen Verlauf des Kunstlichts folgen. Durch Beobachtung der Helligkeitsänderungen in den verschiedenen Bildbereichen können dabei diese verschiedenen Lichtklassen voneinander isoliert werden und dementsprechend diejenigen Bereiche identifiziert werden, die Informationen bezüglich des Tageslichts beinhalten.

Im Rahmen des oben erwähnten Optimierungsalgorithmus kann dementsprechend gemäß einer ersten Variante der Controller dazu ausgebildet sein, den einem Bildbereich zugehörigen Gewichtungsfaktor anzuheben, falls die zeitliche Änderung der Helligkeitsinformation dieses Bildbereichs der zeitlichen Änderung der Gesamthelligkeit des Bildes ähnlich ist, und zu reduzieren, falls die zeitliche Änderung der Helligkeitsinformation dieses Bildbereichs der zeitlichen Änderung der Gesamthelligkeit des Bildes nicht ähnlich ist.

Im Rahmen verschiedener Testreihen hat sich dabei herausgestellt, dass alternativ zu der oben beschriebenen Variante auch die Möglichkeit besteht, den einem Bildbereich zugehörigen Gewichtungsfaktor anzuheben, falls die Helligkeitsinformation dieses Bildbereichs der zeitlichen Änderung der Gesamthelligkeit des Bildes nicht ähnlich ist, und zu reduzieren, falls die Helligkeitsinformation dieses Bildbereichs der zeitlichen Änderung der Gesamthelligkeit des Bildes ähnlich ist. Auch in diesem Fall wird der Controller in die Lage versetzt, nach Beobachtung des zeitlichen Verlaufs der Helligkeiten in den Bildinformationen automatisch diejenigen Bereiche zu identifizieren, die primär Informationen bezüglich des Tageslichts beinhalten.

Dabei kann bei beiden Varianten vorgesehen sein, dass die durch den Algorithmus veränderten Gewichtungsfaktoren lediglich innerhalb eines bestimmten Wertebereichs verändert werden können. Hierdurch können Grenzfälle ausgeschlossen werden, in denen einzelne Bildbereiche übermäßig stark das Messsignal beeinflussen bzw. aus der Bewertung vollständig herausfallen.

Gemäß einer vorteilhaften Weiterbildung kann ferner vorgesehen sein, dass - im Falle der Verwendung von Farb-Bildsensoren - zusätzlich zu einem Helligkeitssignal der Controller auch eine Farbinformation bzw. eine Farbtemperaturinformation ausgibt. Dabei wäre insbesondere denkbar, dass der Controller hierbei auf die im Rahmen des Optimierungsalgorithmus gewonnen Erkenntnisse zurückgreift und einerseits eine das Tageslicht repräsentierende Farbinformation bzw. Farbtemperaturinformation sowie andererseits eine das Kunstlicht repräsentierende Farbinformation bzw. Farbtemperaturinformation erstellt. Diese Zusatzinformationen könnten dann beispielsweise dazu genutzt werden, die Farbe des Kunstlichts an die Farbe des natürlichen Tageslichts anzupassen.

Weitere Maßnahmen können dazu beitragen, den Aufwand beim Durchführen des oben erwähnten Optimierungsalgorithmus bzw. beim Erstellen des letztendlich ausgegebenen Signals zu reduzieren. Eine erste Maßnahme kann dabei darin bestehen, die Auflösung des von dem Bildsensor erfassten Bildes zunächst zu reduzieren und den Optimierungsalgorithmus dann lediglich auf Basis der Bilder mit reduzierter Auflösung durchzuführen. Hierdurch können auch verhältnismäßig einfach gestaltete Prozessoren zum Einsatz kommen und der Speicherbedarf wird sehr gering gehalten.

Eine andere Maßnahme, die zur Verbesserung hinsichtlich der Qualität des Helligkeitssignals beiträgt, besteht darin, beim Bewerten der Bildinformationen zunächst mehrere bei unterschiedlichen Belichtungsstufen von dem Bildsensor erfasste Bilder zu einem Bild mit sog. erhöhter Helligkeitsdynamik zu kombinieren. Hintergrund für diese Maßnahme ist, dass ein klassischer digitaler Bildsensor im Vergleich zu einem spezialisierten Lichtsensor einen geringeren Dynamikumfang aufweist. Das heißt, ein einzelnes, von dem Bildsensor erfasstes Bild wird in der Regel nur innerhalb eines begrenzten Helligkeitsbereichs Informationen zur Verfügung stellen. Um trotz allem letztendlich ein Helligkeitssignal erzeugen zu können, das hinsichtlich seines Umfangs dem Wertebereich eines klassischen Lichtsensors entspricht, werden vorzugsweise im Rahmen einer Belichtungsreihe mehrere Bilder bei unterschiedlichen Belichtungsstufen erfasst und dann zu einem so genannten HDR-Bild, also einem Bild mit erhöhter Helligkeitsdynamik zusammengefasst. Entsprechende Verfahren hierzu sind bereits aus dem Stand der Technik bekannt. Der Optimierungsalgorithmus selbst wird dann auf Basis dieser Bilder mit erhöhter Helligkeitsdynamik durchgeführt.

Letztendlich hat sich gezeigt, dass durch die oben beschriebenen Maßnahmen die von dem Bildsensor erfassten Informationen durch den Controller derart effizient ausgewertet werden können, dass das letztendlich erhaltene Helligkeitssignal sehr gut das Tageslicht wiedergibt und hinsichtlich seiner Qualität dem Signal eines optimal montierten klassischen Lichtsensors entspricht. Der große Vorteil besteht allerdings darin, dass die neue Sensoreinheit nicht mehr entsprechend strengen Vorschriften montiert werden muss und trotz allem selbstständig in der Lage ist, die zum Erfassen des Tageslichts relevanten Bildbereiche zu identifizieren.

Nachfolgend soll die Erfindung anhand der beiliegenden Zeichnung näher erläutert werden. Es zeigen:
- Figur 1:: die Komponenten eines aus dem Stand der Technik bekannten Systems zur tageslichabhängigen Beleuchtungssteuerung;
- Figur 2:: ein System zur tageslichabhängigen Beleuchtungssteuerung mit einer erfindungsgemäßen Sensoreinheit;
- Figur 3:: den grundsätzlichen Aufbau der erfindungsgemäßen Sensoreinheit;
- Figur 4:: denkbare Gewichtungsfunktionen zum Zusammenführen mehrere LDR-Bilder zu einem HDR-Bild;
- Figur 5:: die Aufbereitung der von dem Bildsensor erfassten Daten;
- Figur 6:: das Zusammenführen dreier LDR-Bilder zu einem HDR-Bild und
- Figuren 7a bis 7h:: den Aufbau der Gewichtungsmatrix unter Verwendung des Optimierungsalgorithmus.

Figur 2 zeigt ein Beispiel eines Beleuchtungssystems, bei dem eine erfindungsgemäße Sensoreinheit 100 zum Einsatz kommt.

Ebenso wie bei der aus dem Stand der Technik bekannten, in Figur 1 dargestellten Lösung wird die Sensoreinheit 100 vorzugsweise an der Decke eines zu beleuchtenden Raumes 200 montiert, wobei die Sensoreinheit 100 zum Erfassen des Tageslichts auf eine Fensterfläche 201 gerichtet ist. Das von der Sensoreinheit 100 abgegebene Helligkeitssignal wird an ein Steuergerät 215 zur Ansteuerung der Leuchten 220 übermittelt, um diese hinsichtlich ihrer Helligkeit abgestimmt auf das Tageslicht anzusteuern.

Die Besonderheit der erfindungsgemäßen Lösung besteht darin, dass nunmehr die erfindungsgemäße Sensoreinheit 100 nicht zwingend derart angeordnet werden muss, dass der von ihr erfasste Bereich zu 100% mit der Fensterfläche 201 übereinstimmt bzw. ausschließlich auf die Fensterfläche 201 gerichtet ist und keine störenden Objekte mehr umfasst. Stattessen kann der erfasste Bereich durchaus größer sein bzw. das Fenster selbst kann - wie dargestellt - störende Objekte 202 wie Sprossen oder dergleichen aufweisen, die normalerweise das Messsignal eines klassischen Lichtsensors beeinträchtigen würden. Die erfindungsgemäße Sensoreinheit 100 ist gegenüber derartigen an sich störenden Effekten immun, also in der Lage, derartige störende Objekte automatisch zu unterdrücken bzw. zu ignorieren und trotz allem ein aussagekräftiges Signal, welches Auskunft über das Tageslicht gibt, an die Steuereinheit 215 zu übermitteln.

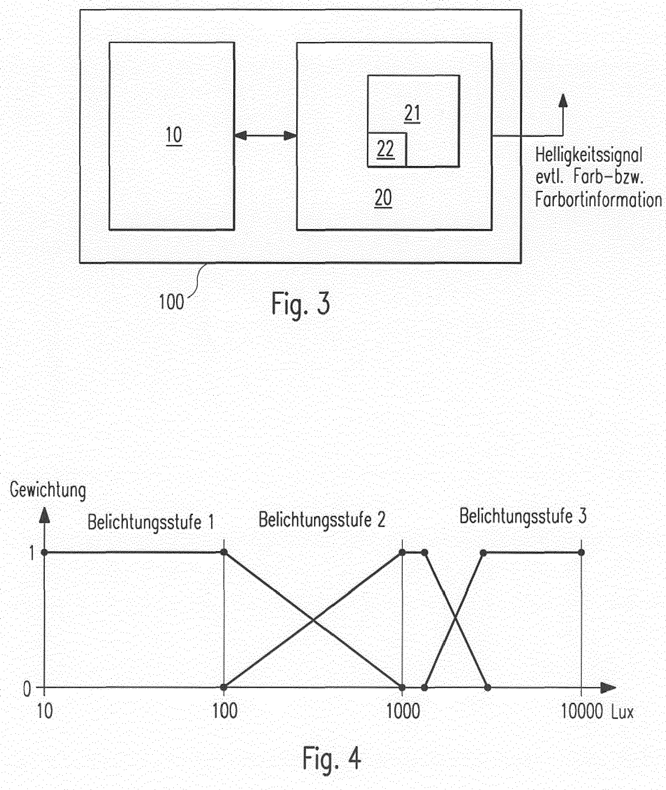

Entsprechend der schematischen Darstellung von Figur 3 besteht die erfindungsgemäße Sensoreinheit 100 im Wesentlichen aus zwei Komponenten, zum einen einem Bildsensor 10 sowie zum anderen einem Mikrocontroller 20, wobei vorzugsweise beide Einheiten innerhalb eines gemeinsamen Gehäuses angeordnet sind, theoretisch allerdings auch getrennt voneinander angeordnet sein könnten. Aufgabe des Bildsensors 10 ist es, ein digitales Bild desjenigen Bereichs zu erstellen, auf den die Sensoreinheit 100 ausgerichtet ist. Der Bildsensor 10 dient also dazu, ein zweidimensionales Abbild der Lichtsituation auf elektronischem Weg zu ermitteln. Die Resultate werden in Bildern, einer Matrix aus Bildpunkten (Pixeln) digital gespeichert. Je nach Art der Bilddaten besteht dabei ein Pixel aus einem Helligkeitswert im Fall von Schwarzweiß-Bildern oder aus mehreren Helligkeitswerten im Fall von Farbbildern. In jedem Fall werden die Bilddaten über eine Matrix aus lichtempfindlichen Bauteilen, z.B. einen CCD-Sensor oder einen CMOS-Sensor, detektiert, digitalisiert und an die nachfolgende Verarbeitungseinheit, also den Controller 20 weitergegeben. Im einfachsten Fall kann es sich bei dem Bildsensor 10 um eine einfach gehaltene Digitalkamera handeln.

Aufgabe des Controllers 20 ist es, zum einen die Digitalkamera bzw. den Bildsensor 10 anzusteuern, um das Erstellen der Digitalbilder zu initiieren. Andererseits analysiert der Controllers 20 die erhaltenen Bilddaten und leitet daraus das letztendlich gewünschte Helligkeitssignal ab. Bei diesem Helligkeitssignal handelt es sich um einen einzelnen Zahlenwert, der vergleichbar mit dem Signal eines klassischen Lichtsensors Auskunft über die Intensität des in den Raum einfallenden Tageslichts gibt. Der Controller 20 beinhaltet hierzu einen Mikrocontroller 21 zum Durchführen der Berechnungen für die Bildauswertung sowie einen - in der Regel in den Mikrocontroller 21 integrierten - Speicher 22, in dem zumindest einige der von dem Bildsensor 10 übermittelten Bilder zwischengespeichert werden können.

Der von dem Controller 20 ausgegebene Wert wird also aus den Informationen der von dem Bildsensor 10 erfassten Bilder abgeleitet. Da dieser Bildsensor 10 wie oben erwähnt nicht zwingend nur auf Bereiche gerichtet ist, die durch das Tageslicht beeinflusst werden, muss also beim Erstellen des letztendlichen Helligkeitssignals eine Aussage darüber getroffen werden, welche Bildbereiche tageslichtrelevante Informationen enthalten und bei welchen Bildbereichen dies nicht der Fall ist. Idealerweise sollte also bei der in Figur 2 schematisch dargestellten Situation in erster Linie das Signal auf Basis von Informationen erstellt werden, welche die Fensterflächen, also die gestrichelt dargestellten Bereiche betreffen. Alle anderen Bereiche hingegen des von dem Bildsensor 10 erfassten Bildes sollten ignoriert oder zumindest weniger stark berücksichtigt werden.

Gemäß der vorliegenden Erfindung erfolgt diese Bewertung der Bildbereiche durch den Controller 20 selbst, der im Rahmen eines speziellen, nachfolgend noch näher beschriebenen Helligkeits-Messalgorithmus die digitalen Bilddaten auswertet und darauf basierend dann das Helligkeitssignal ermittelt. Dabei werden vorzugsweise die von dem Bildsensor 10 übermittelten Daten zunächst aufbereitet, wie nachfolgend näher beschrieben wird.

Im Hinblick darauf nämlich, dass der Aufwand zum Durchführen des erfindungsgemäßen Helligkeits-Messalgorithmus relativ niedrig sein und idealerweise auch von einem Mikrocontroller mit beschränkten Ressourcen durchführbar sein soll, ist es vorteilhaft, für die letztendlich auszuwertenden Bilder eine vergleichsweise geringe Bildauflösung zu verwenden. Eine Reduzierung der Bildauflösung führt allerdings zusätzlich noch zu einem weiteren Vorteil. So wird durch die Herabsetzung der Auflösung das Helligkeitssignal in örtlicher Hinsicht sozusagen einer Tiefpassfilterung unterzogen. Hohe Ortsfrequenzen, welche sich durch hohe Kontraste bzw. Grauwert-Unterschiede im Bild ausdrücken, werden auf diese Weise automatisch unterdrückt. Lokale Glanzpunkte im Bild, die beispielsweise durch Spiegelungen entstehen, können durch die zum Reduzieren der Bildauflösung durchgeführte Mittelwertbildung minimiert werden. Es hat sich gezeigt, dass derartige Glanzpunkte nicht wesentlich zur Raumhelligkeit beitragen, den Messwert aber deutlich verfälschen können, so dass die Herabsetzung der Auflösung automisch zu einer Verbesserung des letztendlich erstellten Helligkeitssignals führt. Andererseits sollte die Auflösung selbstverständlich noch eine ausreichende Differenzierung zwischen verschiedenen Bereichen des Bilds zulassen. Als sinnvoller Kompromiss zwischen diesen unterschiedlichen Anforderungen hat sich hierbei eine Auflösung von 40x30 Pixel heraus gestellt, wobei sich in diesem Fall dann bei 8 Bit/Pixeln ein Speicherverbrauch von 1,2 kB pro Bild bzw. 2,4 kB pro Bild bei 16 Bit/Pixel ergibt. Abhängig von den zur Verfügung stehenden Ressourcen kann allerdings selbstverständlich auch eine andere, insbesondere eine höhere Auflösung für die zu bewertenden Bilder gewählt werden.

Eine weitere Problematik bei der Verwendung eines Bildsensors zum Ermitteln eines Helligkeitssignals besteht darin, einen ausreichend hohen Messbereich erzielen zu können, da der sog. Dynamikumfang eines Bildsensors insbesondere im Vergleich zu einem klassischen Lichtsensor begrenzt ist. Der letztendlich realisierbare Messbereich für das auszugebende Helligkeitssignal sollte dabei einen Bereich von 0-5000 Lux abdecken können. Der Ausgabewert entspricht dabei in erster Näherung der gemittelten, über das ganze Bild aufgenommenen Helligkeit, wobei einzelne Bildteile dabei 5000 Lux auch deutlich überschreiten können.

An dieser Stelle muss darauf hingewiesen, dass streng genommen der Bildsensor ebenso wie das menschliche Auge lediglich eine Leuchtdichte (in der Einheit Candela/m²) direkt messen kann, nicht jedoch die in der Einheit Lux angegebene Beleuchtungsstärke. Den Zusammenhang zwischen der Leuchtdichte und der Beleuchtungsstärke stellt der sog. Reflexionsfaktor dar. Wird dieser - wie im folgenden angenommen - als konstant betrachtet, so kann das Signal in Lux ausgegeben werden. Dieser Lux-Wert ist dann aber nicht als Absolutwert zu betrachten sondern stellt korrekter Weise eher einen zur Beleuchtungsstärke proportionalen Wert dar. In diesem Sinne sind die nachfolgen genannten Lux-Werte zu verstehen.

Aus den oben genannten Gründen ist es also unerlässlich, den Dynamikbereich des Bildsensors zu erweitern, was gemäß einer bevorzugten Ausführungsform der Erfindung durch die nachfolgend näher beschriebene Vorgehensweise erzielt wird. Dabei wird ein sogenanntes High-Dynamic-Range-Bild (HDR-Bild), also ein Bild mit erhöhtem Dynamikumfang aus einer Belichtungsreihe "gewöhnlicher", sogenannter Low-Dynamic-Range (LDR) Bilder, die durch den Bildsensor 10 erfasst werden, ermittelt. Alternativ hierzu bestehen allerdings auch andere Möglichkeiten zum Erhalten eines HDR-Bildes, wie später noch näher erläutert wird.

Eine Belichtungsreihe besteht dabei aus zwei oder mehreren Bildern derselben Szene, aufgenommen mit unterschiedlichen Belichtungseinstellungen. Es ist dabei freigestellt ob die Sensorempfindlichkeit, Blende und/ oder Belichtungszeit variiert wird. Aus den unterschiedlichen Aufnahmen kann dann Pixel für Pixel ein Bild mit erhöhtem Kontrastumfang errechnet werden. In einer als Gesamtheit überbelichteten Aufnahme beispielsweise sind dunkle Stellen korrekt belichtet, in unterbelichteten Aufnahmen hingegen liegt eine korrekte Belichtung heller Stellen wie z.B. Wolken am Himmel oder dergleichen von. Auf diese Weise finden sich in jeder Belichtungsstufe Bildteile, die letztendlich gemeinsam zu dem HDR-Bild beitragen.

Für die Zusammenführung der Bilder unterschiedlicher Belichtungsstufen sind mehrere Verfahren aus dem Stand der Technik bekannt. Im Grunde bauen alle bekannten Verfahren darauf auf, die Pixel-Helligkeitswerte zu linearisieren, auf den neuen Ausgabebereich zu skalieren und gewichtet nach Korrektheit des Messwertes zu verrechnen. Der Hauptunterschied liegt dabei in der Wahl der Gewichtungsfunktion. Verschiedene Möglichkeiten hierzu sind beispielsweise in Fode A.: Robuste Generierung von High Dynamic Range Bildern (Diplomarbeit), Institut für Computervisualistik, Universität Koblenz Landau, 2004 beschrieben. Gemäß einer bevorzugten Ausführungsform der Erfindung wird eine einfache, in Hinblick auf eine Implementierung am Mikrocontroller optimierte Gewichtungsfunktion verwendet, wie nachfolgend näher beschrieben wird.

Eine Voraussetzung für die Gewinnung eines HDR-Bildes im Rahmen der vorliegenden Zusammenführung mehrerer LDR-Bilder betrifft die Unbeweglichkeit von Szene und Kamera während der Aufnahme der Belichtungsreihe. Meist werden die Aufnahmen einer Belichtungsreihe kurz nacheinander angefertigt. Damit die einzelnen Pixel aus den unterschiedlichen Aufnahmen einwandfrei miteinander verrechnet werden können, sie repräsentieren ja den gleichen Bildpunkt mit unterschiedlichen Helligkeiten, sollten sich weder die Szene verändern noch die Kamera bewegen. Jede Veränderung eines dieser Faktoren verschlechtert das Ergebnis. Da über die Zeit unveränderliche Szenen eher selten sind, wurden Verfahren entwickelt, die Veränderungen in den Einzelbildern tolerieren können, wobei entsprechende Vorgehensweisen wiederum aus dem bereits oben genannten Stand der Technik bekannt sind. Auf derartige ergänzende Maßnahmen kann ggf. zurückgegriffen werden, wobei für das vorliegende Gebiet der Lichtmessung allerdings die Voraussetzungen, HDR-Bilder aufnehmen zu können, verhältnismäßig gut sind, da sich der Bildsensor fix montiert - in der Regel an der Decke - befindet und eine überwiegend unbewegte Szene fotografiert. Kleinere Bewegungen im Bild, z.B. von Bäumen oder Wolken, aber auch von vorbeigehenden Personen in diesem Fall können als Störgrößen akzeptiert werden.

Kameras bzw. die Bildsensoren von Digitalkameras geben üblicherweise Helligkeitswerte nicht ideal linear wieder. Diese Nichtlinearitäten sind gewollt vom Hersteller eingefügt, um einen, speziell auf den Aufnahmechip abgestimmten, möglichst natürlichen Bildeindruck zu vermitteln. Für die HDR-Bildberechnung werden allerdings lineare Helligkeitswerte benötigt um die einzelnen Belichtungsstufen zusammensetzen zu können. Die Kurvenform der so genannten Kamerakurve hat meist einen sog. Gammakurven-ähnlichen Verlauf um das ursprünglich lineare Helligkeitssignal des Bildsensors der logarithmischen Helligkeitsempfindung des menschlichen Auges anzupassen. Dabei kann der Kurvenverlauf der Kamerakurve auch von einer idealen Gammakurve abweichen und für jede Farbkomponente unterschiedlich ausgestaltet sein. Werden die Bildinformation von dem Bildsensor 10 in dieser modifizierten Weise ausgegeben, so ist zunächst eine Korrektur der Werte erforderlich, um wieder die gewünschte Linearform zu erhalten, was im Allgemeinen mit Hilfe einer inversen Gammafunktion erzielt werden kann.

Nach Ermittlung der linearen Helligkeitswerte der Bilddaten werden diese dann passend auf den Zielbereich skaliert. Jede Belichtungsstufe benötigt hierfür einen eigenen Skalierungsfaktor, wodurch ermöglicht wird, dass die Werte vergleichbar sind und miteinander verrechnet werden können.

Beispielsweise werden die Daten auf die Lux-Skala abgebildet, wobei bei dem folgenden Beispiel davon ausgegangen wird, dass die Daten der LDR-Bilder als Schwarzweiß-Bild mit 8 Bit/Pixel vorliegen, während hingegen das HDR-Zielbild 16 Bit/Pixel umfassen soll. Der Minimalwert wird dabei mit 0 Lux und der Maximalwert mit 10000 Lux festgelegt, wodurch sich eine Helligkeits-Auflösung von 0,15 Lux/Digit ergibt. Beobachtungen haben gezeigt, dass einzelne Bildteile deutlich über 5000 Lux hell werden können auch wenn der Gesamt-Ausgabewert des Sensors sein Maximum von 5000 Lux noch nicht erreicht hat. Ein Maximalwert von 10000 Lux stellt dementsprechend eine praktikable Größe dar, wobei ggf. der Bereich auch entsprechend angepasst werden kann.

Versuche haben dabei ergeben, dass für eine Belichtungsreihe drei Belichtungsstufen, getrennt durch zwei sog. F-Stops (der Unterschied von einer Belichtungsstufe zur nächsten wird als F-Stop oder oftmals auch als Zeitstufe oder Blendenstufe bezeichnet) genügen, um den Dynamikumfang derart zu erweitern, dass der gewünschte Messbereich abgedeckt werden kann. In den einzelnen Belichtungsstufen finden sich dabei aufgrund der zuvor durchgeführten Skalierung Bildteile, deren Messwerte sich überschneiden. Es muss daher entschieden werden, welcher Messwert in das letztendlich gebildete HDR-Bild aufgenommen wird. Dies kann gemäß einer bevorzugten Ausführungsform der Erfindung, welche schematisch in Figur 4 gezeigt ist, durch den Einsatz mehrerer stückweise stetigen Gewichtungsfunktionen erfolgen, welche mit den Messwerten der LDR-Bilder multipliziert werden. Die Gewichtungsfunktionen der LDR-Bilder überlappen sich dabei in den Übergangsbereichen, wobei sichergestellt sein muss, dass der Gesamt-Gewichtungsfaktor an jeder Stelle 1 beträgt. Die Skalierungsfaktoren und Gewichtungsfunktionen hängen dabei von dem zum Einsatz kommenden Bildsensor ab und können beispielsweise experimentell bestimmt werden, indem im Rahmen eine Kalibrierung das letztendlich erhaltene Helligkeitssignal mit dem Signal eines klassischen Helligkeitssensors verglichen wird.

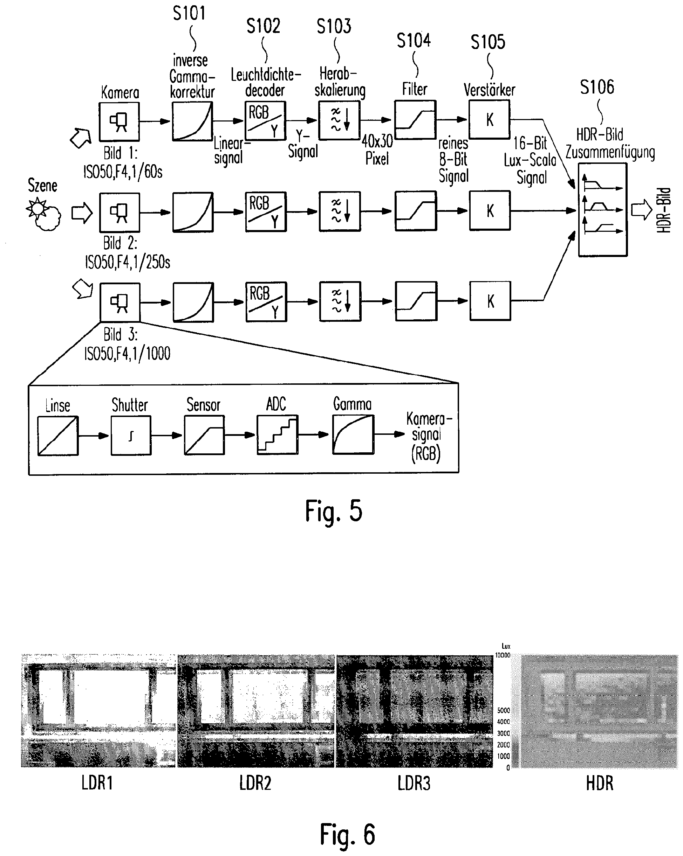

Der vollständige Prozess der HDR-Bildberechnung ist in Figur 5 schematisch zusammengefasst. Die Einzelbilder der Belichtungsstufen werden also zuerst einer Gammakorrektur (S101) unterzogen, in Grauwerte umgerechnet (S102) und auf die Zielauflösung von 40x30 Pixel skaliert (S103). Die auf diese Weise entstandenen 8-Bit Helligkeitsbilder durchlaufen anschließend vorzugsweise eine Filterung (S104), bei der Werte an den Rändern des Wertebereichs herausgenommen werden. Da die Skalierung durch eine Mittelwertbildung der Pixel des hochauflösenden Bildes erfolgt, kann angenommen werden, dass in den Randwerten viele Informationen von über- bzw. unterbelichteten Pixeln enthalten sind. Diese verfälschen den Messwert, da die Größe der Fehlbelichtung unbekannt ist. Als Threshold-Werte für die Filterung dienen beispielsweise die Werte 32 und 224. Im darauffolgenden Schritt (S105) werden die Helligkeitswerte auf die Lux-Skala skaliert und abschließend (S106) gewichtet über die passende Funktion in das HDR-Bild eingetragen. Hierdurch entsteht schließlich aus mehreren 8-Bit Graustufenbildern ein 16-Bit HDR-Bild, welches den Ausgangspunkt für den nachfolgenden Optimierungsalgorithmus bildet.

Figur 6 zeigt beispielhaft das Kombinieren dreier LDR-Bilder zu einem 16-Bit HDR-Bild. Dargestellt sind drei mit unterschiedlichen Belichtungsstufen erstellte Gaustufenbilder in der reduzierten Auflösung von 40x30 Pixlen, welche schließlich zu dem rechts dargestellten HDR-Bild kombiniert werden. Dieses beinhaltet Helligkeitsinformationen über den gesamten gewünschten Bereich von 0 Lux bis 10.000 Lux.

Wie bereits oben erwähnt könnte das angestrebte HDR-Bild allerdings auch anderweitig erhalten werden. Beispielsweise könnten Bildsensoren zum Einsatz kommen, in denen das beschriebene Verfahren der Zusammenfassung mehrerer LDR-Bilder bereits intern implementiert ist und welche dementsprechend bereits von sich aus ein HDR-Bild ausgeben. Ferner könnten auch Bildsensoren mit einer logarithmischen Kennlinie zum Einsatz kommen oder es werden mehrere Bildsensoren verwendet, welche gleichzeitig das selbe Motiv mit unterschiedlichen Belichtungseinstellungen aufnehmen, wobei dann wiederum die Bilder der Sensoren zu eine HDR-Bild zusammengefasst werden.

Mit Hilfe des in der oben beschriebenen Weise gewonnen HDR-Bilds kann also die Helligkeit an jeder Stelle des von dem Bildsensor erfassten Bereichs über den vollen Messbereich ermittelt werden. Für die angestrebte Beleuchtungssteuerung ist es allerdings erforderlich, hieraus einen einzelnen Helligkeitswert zu erzeugen, der dem Signal eines korrekt oberhalb des Fensters montierten Lichtsensors entspricht. D.h., die Helligkeitswerte der verschiedenen Pixel können nicht einfach gemittelt werden sondern müssen hinsichtlich ihrer Relevanz für das gewünschte Helligkeitssignal geeignet gewichtet werden, so dass sich im Blickfeld des Bildsensors befindende störende Elemente von der Bewertung ausgeschlossen werden bzw. in ihrem Einfluss auf des Messergebnis zumindest reduziert werden.

Damit der erfindungsgemäße Helligkeitssensor im Rahmen eines geeigneten Algorithmus in die Lage versetzt wird, die Relevanz der verschiedenen Bildbereiche bzw. Pixel selbständig erkennen zu können, wird von den folgenden Annahmen ausgegangen:
- Der gesuchte Messwert wird - hauptsächlich - durch die Pixel der Fensterfläche repräsentiert. Dies entspricht der Montagevorschrift des klassischen LSD-Lichtsensors, der nur auf offene Fensterflächen blicken darf.
- "Gleichartige Lichtanteile verhalten sich gleichartig". Dies bedeutet, Pixel, die Tageslichtanteile repräsentieren, folgen mehr oder weniger dem Verlauf des (Gesamt-)Tageslichtes. Pixel hingegen, die mit Kunstlicht beaufschlagt sind, folgen stattessen eher der Kunstlichtkurve.
- Durch Beobachtung der Pixelwerte über einen längeren Zeitraum können die einzelnen Lichtklassen voneinander isoliert werden.

Basierend auf diesen Überlegungen kann erfindungsgemäß eine Gewichtungsmatrix erstellt werden, mit deren Hilfe ein korrektes Messsignal gewonnen werden kann. Die Besonderheit liegt dabei darin, dass die Sensoreinheit in der Lage ist, selbstständig diese Gewichtungsmatrix zu optimieren. Hierzu wird der Helligkeitsverlauf der von dem Bildsensor 10 erfassten Bilder über einen längeren Zeitraum hinweg beobachtet. Die Beobachtung des Helligkeitsverlaufs über einen längeren Zeitraum zeigt dabei auf, welche Bildanteile starken Änderungen unterworfen sind und welche Bildteile vergleichsweise konstant bleiben.

Die Berechnung des korrekten Messwerts auf Basis eines HDR-Bildes erfolgt dann also über die bereits erwähnte Gewichtungsmatrix. Pro Pixel des Bildes wird in dieser Matrix ein Wert gespeichert, mit welchem der jeweilige Helligkeitswert des zugehörigen Pixels des HDR-Bildes multipliziert wird. Die Summe dieser Produkte ergibt dann den Gesamt-Messwert, weshalb die Summe aller Elemente der Gewichtungsmatrix immer 1 betragen sollte. Andernfalls müßten die gewichteten Pixel-Helligkeitswerte nochmals summiert und das entsprechende Ergebnis normiert werden.

Im Falle der bevorzugten Ausführungsform wird jedes Element bzw. jeder Eintrag der Gewichtungsmatrix mit dem Wert 1/(Anzahl der Pixel) initialisiert. Bei 40x30 Pixel Bildgröße ist das 1/1200 oder 0,000833. Damit sind alle Pixel gleich gewichtet und eine Anwendung auf das HDR-Bild entspricht zunächst einer Mittelwertbildung.

Auf diese Ausgangsform der Gewichtungsmatrix wird dann der nachfolgend beschriebene Algorithmus angewendet, der von der oben formulierten Annahme des gleichartigen Verhaltens gleichartiger Lichtanteile ausgeht. Dieser Algorithmus weist folgende Schritte auf:
Schritt 1: Gewichtungsmatrix initialisieren (im vorliegenden Beispiel Faktor = 1/1200).
Schritt 2: Ermittlung des Gradienten der Helligkeitsänderung des Gesamtbildes (bezogen auf das vorhergehende Bild); es wird also ermittelt, wie sich die Gesamthelligkeit des Bildes geändert hat.
Schritt 3: Schleife über alle Pixel
   i) Vergleich des Pixelgradienten, also der Änderung der Pixelhelligkeit mit dem Gesamt-Gradienten
      - falls der Pixelgradient in der Nähe des Gesamt-Gradienten liegt (zwischen A*Gradient und B*Gradient): gutes Pixel, d.h. Pixelgewichtung erhöhen (um Faktor C);
      - andernfalls: schlechtes Pixel: Gewichtung verringern (Faktor D);
   ii) minimales und maximales Pixelgewicht beschränken, damit einzelne Pixel nicht die gesamte Gewichtung an sich ziehen können und niedrig gewichtete Pixel eine Chance haben wieder an Gewicht zu gewinnen falls diese "gutes" Tageslicht repräsentieren - Maximalgewicht: E, Minimalgewicht: F.
Schritt 4: Gewichtungsmatrix normalisieren (Gesamtgewicht der Matrix auf 1 setzen).

Die in dem obigen Algorithmus genannten Variablen A bis F können dabei innerhalb gewisser Grenzen gewählt werden, wobei sich folgende Beispielwerte als gut funktionierend gezeigt haben:
A: 0,1
B: 10
C: 1,1
D: 0,91
E: 0,003 (bzw. 0,3%)
F: 0,00001 (bzw. 0,001%)

Insbesondere der dritte Punkt des Algorithmus basiert auf der oben formulierten Annahme bezüglich des gleichartigen Verhaltens der Lichtanteile. Entspricht die Änderung eines Pixelwerts in etwa der Änderung der Gesamthelligkeit, so kann davon ausgegangen werden, dass der entsprechende Bildbereich durch das Tageslicht beeinflusst wird und dementsprechend bei der Erstellung des Helligkeitssignals insgesamt stärker berücksichtigt werden sollte. Bildbereiche bzw. Pixel hingegen, die sich anderweitig verhalten, also z.B. eher durch das Kunstlicht oder anderweitig beeinflusst werden, verhalten sich abweichend hierzu und werden deshalb hinsichtlich ihres Anteils an dem Gesamthelligkeitswert reduziert.

Es hat sich gezeigt, dass alternativ zu einem Vergleich der Helligkeitsänderung eines Pixels mit der Gesamthelligkeitsänderung auch die Möglichkeit bestehen würde, den aktuellen Pixel-Helligkeitswert mit der Änderung der Gesamthelligkeit zu vergleichen. In diesem Fall ändert sich Punkt 3 des oben beschriebenen Optimierungsalgorithmus wie folgt:
Schritt 3 (alternativ): Schleife über alle Pixel
   i) Vergleich des aktuellen Pixelwertes mit dem Gradienten
      - falls der Pixelwert NICHT in der Nähe des Gradienten liegt (zwischen A*Gradient und B*Gradient): gutes Pixel, d.h. Pixelgewichtung erhöhen (um Faktor C);
      - andernfalls: schlechtes Pixel: Gewichtung verringern (Faktor D);
   ii) minimales und maximales Pixelgewicht beschränken, damit einzelne Pixel nicht die gesamte Gewichtung an sich ziehen können und niedrig gewichtete Pixel eine Chance haben wieder an Gewicht zu gewinnen falls diese "gutes" Tageslicht repräsentieren - Maximalgewicht: E, Minimalgewicht: F.

Wiederum sind die oben genannten Beispielswerte für die Variablen A bis F gut geeignet zur Durchführung des Algorithmus, wobei allerdings auch andere Werte denkbar wären.

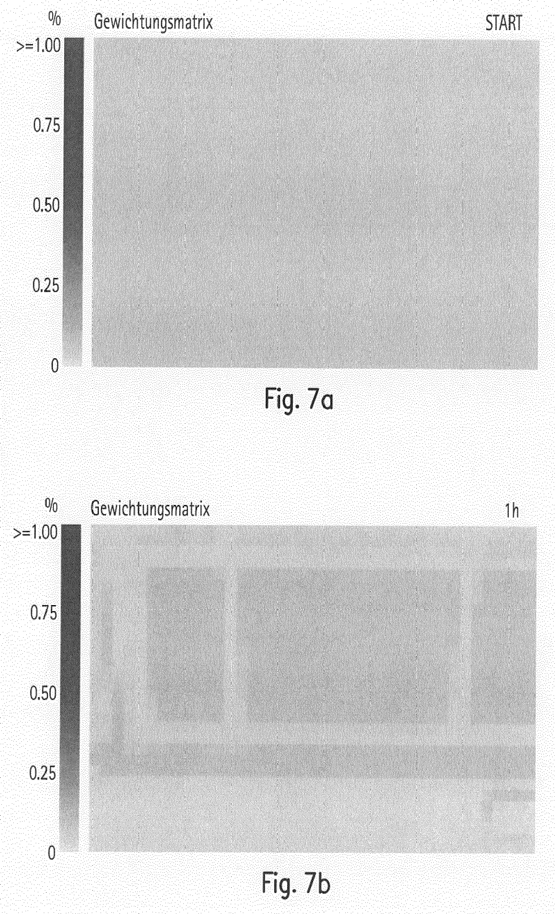

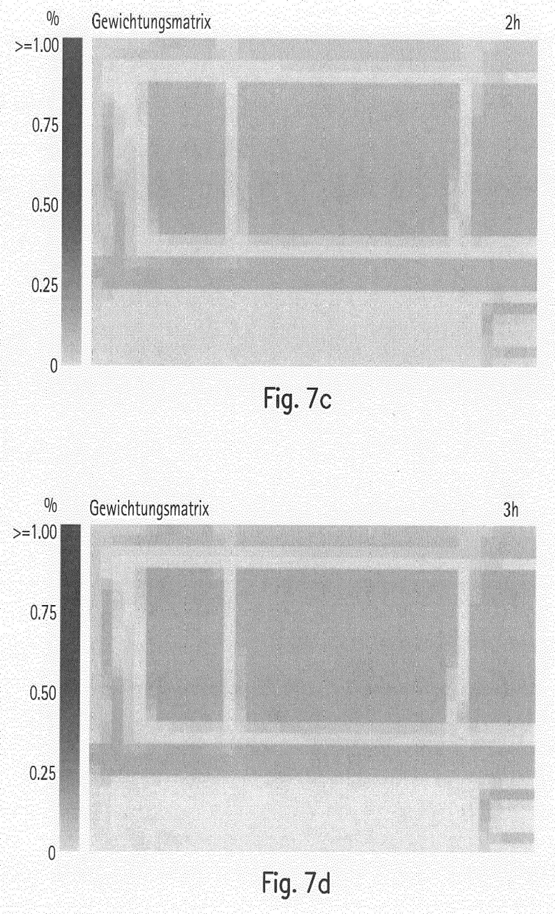

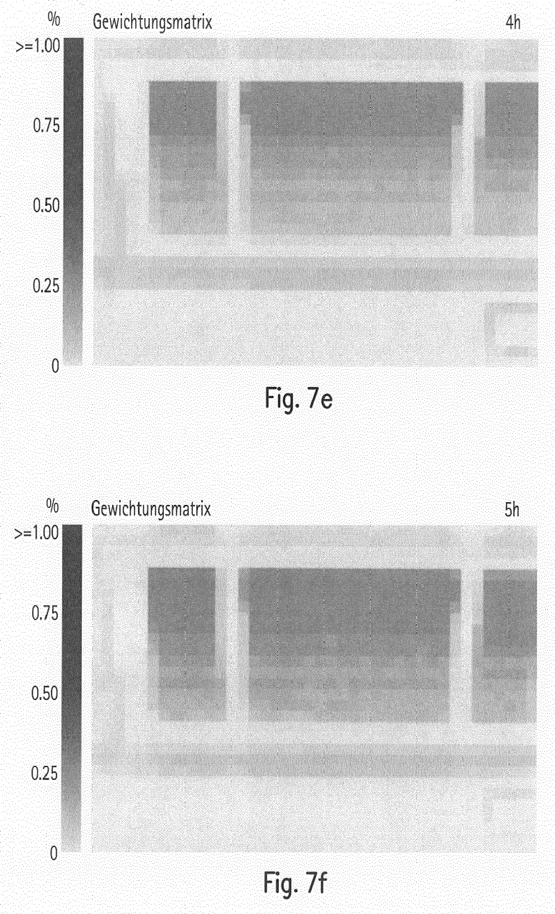

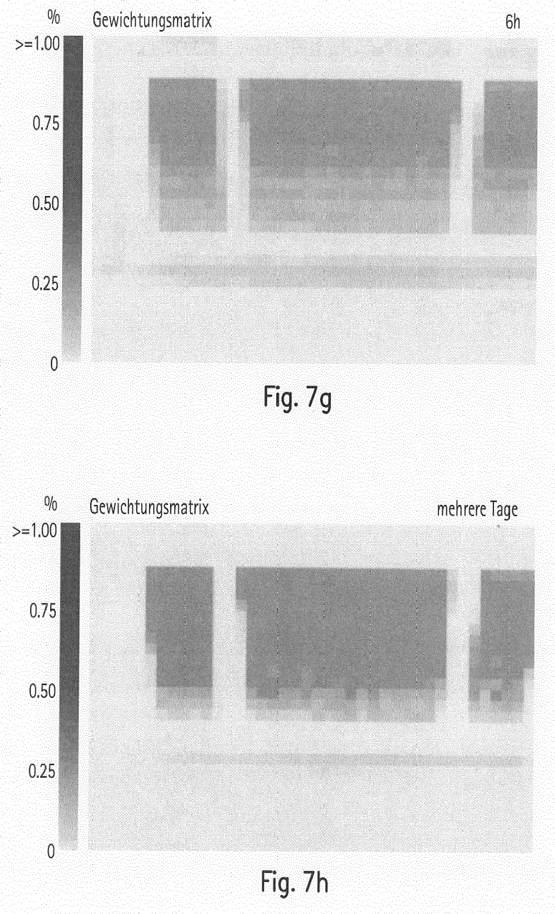

Die Effizienz des erfindungsgemäßen Optimierungsalgorithmus kann den verschiedenen Abbildungen der Figuren 7a bis 7h entnommen werden, welche den Aufbau der Gewichtungsmatrix über mehrere Stunden hinweg darstellen. Es ist gut erkennbar, dass bereits nach verhältnismäßig kurzer Zeit die Fensterflächen des von dem Bildsensor erfassten Bildes hervortreten. Die zu Beginn noch vorhandenen Gewichtungen an den Innenwänden werden über die Zeit immer weiter reduziert. Nach einigen Tagen sind falsch gewichtete Stellen fast vollständig verschwunden und die Fensterflächen des erfassten Bildes werden eindeutig bei der Ermittlung des Helligkeitssignals am stärksten gewichtet.

Dabei hat sich gezeigt, dass das Zeitintervall zwischen den einzelnen Aufnahmen für die Bildung der Gewichtungsmatrix eine eher untergeordnete Rolle spielt. Im dargestellten Beispiel wurden die Bilder in Intervallen von 5 Minuten erstellt und bewertet. Intervalle mit einer Minute oder lediglich 20 Sekunden führen jedoch zu einem vergleichbaren bzw. zu demselben Ergebnis. Darüber hinaus hat sich auch gezeigt, dass der Startzeitpunkt keinen Einfluss auf das Endergebnis hat sondern allenfalls zu einer gewissen Verzögerung im Aufbau der Matrix führt. Eindeutig führt allerdings der Optimierungsalgorithmus dazu, dass nach einer gewissen Anpassungsphase der erfindungsgemäße Sensor selbstständig die von dem Bildsensor erfassten Daten in tageslichtrelevante Informationen und irrelevante Informationen unterteilen kann, um auf Basis der relevanten Informationen ein das Tageslicht repräsentierendes Signal zu erstellen.

Dabei ist zu erwähnen, dass die beiden beschriebenen Varianten des Optimierungsalgorithmus lediglich zwei Ausführungsbeispiele darstellen, durch welche der Sensor in die Lage versetzt wird, tageslichtrelevante Informationen von tageslicht-irrelevanten Informationen zu unterscheiden. Es wären allerdings auch andere Algorithmen denkbar, mit deren Hilfe die Bewertung der von dem Bildsensor erfassten Informationen durchgeführt werden kann, um diejenigen Bereiche, welche kennzeichnend für das Tageslicht sind, zu identifizieren. Beispielsweise könnte auch auf Algorithmen zur Objekterkennung zurückgegriffen werden, wobei hier ggf. der damit verbundene Rechenaufwand dann höher wäre.

Ferner ist zu erwähnen, dass - im Falle der Verwendung von Farb-Bildsensoren - zusätzlich zu einem Helligkeitssignal der Controller auch eine Farbinformation bzw. eine Farbtemperaturinformation ausgeben könnte. Dabei wäre insbesondere denkbar, dass der Controller hierbei auf die im Rahmen des Optimierungsalgorithmus gewonnen Erkenntnisse zurückgreift und einerseits eine das Tageslicht repräsentierende Farbinformation bzw. Farbtemperaturinformation sowie andererseits eine das Kunstlicht repräsentierende Farbinformation bzw. Farbtemperaturinformation erstellt. Hierfür könnte beispielsweise ein Schwellenwert für die Werte der Gewichtungsmatrix festgelegt werden, um zwischen Bildbereichen, die dem Tageslicht zuzurechnen sind, und Bildbereichen, welche dem Kunstlicht zuzurechnen sind, zu unterscheiden. Die beiden Farb- bzw. Farbtemperaturinformationen werden dann jeweils nur anhand der entsprechenden Bildbereiche ermittelt. Alternativ hierzu könnte auch - wie bei der Berechnung des Helligkeitssignals - auf das gesamte Bild zurückgegriffen werden, wobei die Farbinformationen dann bzgl. des Tageslichts wiederum mit den Einträgen der Gewichtungsmatrix multipliziert werden und bei der Berechnung der Information bzgl. des Kunstlichts invertierte Einträge der Gewichtungsmatrix benutzt werden, so dass nunmehr diejenigen Bereiche, welche weniger stark durch das Tageslicht beeinflusst werden, stärkeren Einfluss auf das Ergebnis haben.

Die beiden Farb- bzw. Farbtemperaturinformationen können dann beispielsweise bei der Beleuchtungssteuerung als Sollwert (Farbe des Tageslichts) sowie als Istwert (Farbe des Kunstlichts) genutzt werden, um das Kunstlicht in Abhängigkeit von der Farbe des Tageslichts einzustellen. Auch hier ergibt sich wiederum der vorteilhafte Effekt, dass aller erforderlichen Informationen durch die erfindungsgemäße Sensoreinheit zur Verfügung gestellt werden und darüber hinausgehend keine weitere Sensorik erforderlich ist.

Letztendlich wird also mit Hilfe der vorliegenden Erfindung erstmalig ein Sensor geschaffen, der in die Lage versetzt wird, die von einem Bildsensor erfassten Informationen selbstständig zu bewerten um darauf basierend ein das Tageslicht repräsentierendes Helligkeitssignal erstellen zu können. Der Sensor kann dabei vorzugsweise ohne zusätzliche Maßnahmen bereits bekannte bzw. im Einsatz befindliche Tageslichtsensoren ersetzen, weist allerdings hinsichtlich der Art der Montage und Befestigung eine deutlich höhere Flexibilität auf, was in vielen Anwendungsfällen zu deutlichen Verbesserungen führt.

## Patentansprüche

1. Sensoreinheit (100) zum Ermitteln von Kontrollinformationen für die Verwendung in einer tageslichtabhängigen Lichtsteuerung, aufweisend:
einen Bildsensor (10) zum Erfassen von digitalen Bildinformationen sowie einen Controller (20) zum Auswerten der Bildinformationen und Erstellen eines das Tageslicht repräsentierenden Helligkeitssignals,
wobei
• der Controller (20) dazu ausgebildet ist, beim Erstellen des Helligkeitssignals Bildbereiche der von dem Bildsensor erfassten Bildinformationen, welche stärker durch das Tageslicht beeinflusst werden, mittels Gewichtungsfaktoren stärker zu berücksichtigen,
• der Controller (20) dazu ausgebildet ist, Bildbereiche, welche stärker durch das Tageslicht beeinflusst werden, selbständig zu erkennen,
• zum Erstellen des Helligkeitssignals Helligkeitsinformationen, insbesondere Helligkeitswerte, einzelner Bildbereiche mit einem jeweiligen Gewichtungsfaktor multipliziert werden und der Controller (20) dazu ausgebildet ist, die Gewichtungsfaktoren für die Bildbereiche im Rahmen eines Optimierungsalgorithmus selbständig zu bestimmen,
und wobei im Rahmen des Optimierungsalgorithmus die Helligkeitsinformationen zweier zeitlich nacheinander erfasster Bilder miteinander verglichen werden,
**dadurch gekennzeichnet, dass**
der
Controller (20)
i) den einem Bildbereich zugehörigen Gewichtungsfaktor
a) anhebt, falls die zeitliche Änderung der Helligkeitsinformation dieses Bildbereichs der zeitlichen Änderung der Gesamthelligkeit des Bildes ähnlich ist,
b) reduziert, falls die zeitliche Änderung der Helligkeitsinformation dieses Bildbereichs der zeitlichen Änderung der Gesamthelligkeit des Bildes nicht ähnlich ist,
oder
ii) den einem Bildbereich zugehörigen Gewichtungsfaktor
a) anhebt, falls die Helligkeitsinformation dieses Bildbereichs der zeitlichen Änderung der Gesamthelligkeit des Bildes nicht ähnlich ist,
b) reduziert, falls die Helligkeitsinformation dieses Bildbereichs der zeitlichen Änderung der Gesamthelligkeit des Bildes ähnlich ist.

2. Sensoreinheit nach Anspruch 1,
**dadurch gekennzeichnet,**
**dass** die Gewichtungsfaktoren lediglich innerhalb eines vorgegebenen Bereichs verändert werden.

3. Sensoreinheit nach einem der vorherigen Ansprüche,
**dadurch gekennzeichnet,**
**dass** der Controller (20) dazu ausgebildet ist, zusätzlich zumindest eine Farbinformation bzw. eine Farbtemperaturinformation bzgl. der von dem Bildsensor erfassten Daten zur Verfügung zu stellen.

4. Sensoreinheit nach Anspruch 3,
**dadurch gekennzeichnet,**
**dass** der Controller (20) dazu ausgebildet ist, eine erste, das Tageslicht repräsentierende Farbinformation bzw. Farbtemperaturinformation sowie eine zweite, das Kunstlicht repräsentierende Farbinformation bzw. Farbtemperaturinformation zur Verfügung zu stellen.

5. Sensoreinheit nach einem der vorherigen Ansprüche,
**dadurch gekennzeichnet,**
**dass** der Controller (20) die Auflösung des von dem Bildsensor erfassten Bildes reduziert und den Optimierungsalgorithmus auf Basis der Bilder mit reduzierter Auflösung durchführt.

6. Sensoreinheit nach einem der vorherigen Ansprüche,
**dadurch gekennzeichnet,**
**dass** der Controller (20) dazu ausgebildet ist, mehrere bei unterschiedlichen Belichtungsstufen von dem Bildsensor (10) erfasste Bilder zu einem Bild mit erhöhter Helligkeitsdynamik zu kombinieren und den Optimierungsalgorithmus auf Basis der Bilder mit erhöhter Helligkeitsdynamik durchzuführen.

7. Verfahren zum Ermitteln von Kontrollinformationen für die Verwendung in einer tageslichtabhängigen Lichtsteuerung, aufweisend folgende Schritte:
Erfassen von digitalen Bildinformationen mit Hilfe eines Bildsensors sowie Auswerten der Bildinformationen und Erstellen eines das Tageslicht repräsentierenden Helligkeitssignals,
wobei
• beim Erstellen des Helligkeitssignals Bildbereiche der von dem Bildsensor erfassten Bildinformationen, welche stärker durch das Tageslicht beeinflusst werden, mittels Gewichtungsfaktoren stärker berücksichtigt werden,
• zum Erstellen des Helligkeitssignals Helligkeitsinformationen, insbesondere Helligkeitswerte, einzelner Bildbereiche mit einem jeweiligen Gewichtungsfaktor multipliziert werden und die Gewichtungsfaktoren für die Bildbereiche im Rahmen eines Optimierungsalgorithmus optimiert werden,
und wobei im Rahmen des Optimierungsalgorithmus die Helligkeitsinformationen zweier zeitlich nacheinander erfasster Bilder miteinander verglichen werden, **dadurch gekennzeichnet, dass**
i) der einem Bildbereich zugehörige Gewichtungsfaktor
a) angehoben wird, falls die zeitliche Änderung der Helligkeitsinformation dieses Bildbereichs der zeitlichen Änderung der Gesamthelligkeit des Bildes ähnlich ist,
b) reduziert wird, falls die zeitliche Änderung der Helligkeitsinformation dieses Bildbereichs der zeitlichen Änderung der Gesamthelligkeit des Bildes nicht ähnlich ist,
oder
ii) der einem Bildbereich zugehörige Gewichtungsfaktor
a) angehoben wird, falls die Helligkeitsinformation dieses Bildbereichs der zeitlichen Änderung der Gesamthelligkeit des Bildes nicht ähnlich ist,
b) reduziert wird, falls die Helligkeitsinformation dieses Bildbereichs der zeitlichen Änderung der Gesamthelligkeit des Bildes ähnlich ist.

8. Verfahren nach Anspruch 7,
**dadurch gekennzeichnet,**
**dass** die Gewichtungsfaktoren lediglich innerhalb eines vorgegebenen Bereichs verändert werden.

9. Verfahren nach Anspruch 7 oder 8,
**dadurch gekennzeichnet,**
**dass** zusätzlich zumindest eine Farbinformation bzw. eine Farbtemperaturinformation bzgl. der von dem Bildsensor erfassten Daten zur Verfügung gestellt wird,
wobei vorzugweise eine erste, das Tageslicht repräsentierende Farbinformation bzw. Farbtemperaturinformation sowie eine zweite, das Kunstlicht repräsentierende Farbinformation bzw. Farbtemperaturinformation zur Verfügung gestellt werden.

10. Verfahren nach einem der Ansprüche 7 bis 9,
**dadurch gekennzeichnet,**
**dass** die Auflösung des von dem Bildsensor erfassten Bildes reduziert und der Optimierungsalgorithmus auf Basis der Bilder mit reduzierter Auflösung durchgeführt wird.

11. Verfahren nach einem der Ansprüche 7 bis 10,
**dadurch gekennzeichnet,**
**dass** mehrere bei unterschiedlichen Belichtungsstufen von dem Bildsensor (10) erfasste Bilder zu einem Bild mit erhöhter Helligkeitsdynamik kombiniert werden und der Optimierungsalgorithmus auf Basis der Bilder mit erhöhter Helligkeitsdynamik durchgeführt werden.

## Claims

1. Sensor unit (100) for determining control information for use in daylight-dependent light control, comprising:
- an image sensor (10) for acquiring digital image information, as well as
- a controller (20) for evaluating the image information generating a brightness signal that is representative of daylight,
wherein
• upon generation of the brightness signal, the controller (20) is designed to take greater account of image areas of the image information acquired by the image sensor, which are influenced more strongly by daylight by means of weighting factors,
• the controller (20) is designed to independently detect image areas which are influenced more strongly by the daylight,
• for generating the brightness signal, brightness information, in particular brightness values, of individual image areas are multiplied by a respective weighting factor, and the controller (20) is designed to independently determine the weighting factors for the image areas in the context of an optimization algorithm,
and wherein the brightness information of two images recorded in chronological succession is mutually compared in the context of the optimization algorithm,
**characterized in that**
the controller (20) causes
i) the weighting factor associated with an image area
a) to increase if the temporal change in the brightness information of this image area is similar to the temporal change in the overall brightness of the image,
b) to decrease if the temporal change in the brightness information of this image area is not similar to the temporal change in the overall brightness of the image,
or causes
ii) the weighting factor associated with an image area
a) to increase if the brightness information of this image area is not similar to the temporal change in the overall brightness of the image,
b) to decrease if the brightness information of this image area is similar to the temporal change in the overall brightness of the image.

2. Sensor unit according to claim 1,
**characterized in that**
the weighting factors are only changed within a predetermined range.

3. Sensor unit according to one of the preceding claims,
**characterized in that**
the controller (20) is designed to additionally provide at least one color information or one color temperature information with respect to the data acquired by the image sensor.

4. The sensor unit according to claim 3,
**characterized in that**
the controller (20) is designed to provide a first color information or color temperature information representing daylight, as well as a second color information or color temperature information representing artificial light.

5. Sensor unit according to one of the preceding claims,
**characterized in that**
the controller (20) decreases the resolution of the image acquired by the image sensor, and implement the optimization algorithm based on images with decreased resolution.

6. Sensor unit according to one of the preceding claims,
**characterized in that**
the controller (20) is designed to combine a plurality of images acquired by the image sensor (10) at different exposure stages to form an image with increased brightness dynamics, and to implement the optimization algorithm on the basis of the images with increased brightness dynamics.

7. Method for determining control information for use in daylight-dependent light control, comprising the following steps:
acquiring digital image information by means of an image sensor and evaluating the image information and generating a brightness signal representing daylight,
wherein
• upon generating the brightness signal, image areas of the image information acquired by the image sensor and which are influenced more strongly by the daylight are taken into greater account by means of weighting factors,
• for generating the brightness signal, brightness information, in particular brightness values, of individual image areas with a respective weighting factor are multiplied, and the weighting factors for the image areas are optimized in the context of an optimization algorithm,
and wherein in the context of the optimization algorithm the brightness information of two images recorded in chronological succession are compared with one another,
**characterized in that**
i) the weighting factor associated with an image area
a) is increased if the temporal change in the brightness information of this image area is similar to the temporal change in the overall brightness of the image,
b) is decreased if the temporal change in the brightness information of this image area is not similar to the temporal change in the overall brightness of the image,
or
ii) the weighting factor associated with an image area
a) is increased if the brightness information of this image area is not similar to the temporal change in the overall brightness of the image,
b) is decreased if the brightness information of this image area is similar to the temporal change in the overall brightness of the image.

8. Method according to claim 7,
**characterized in that**
the weighting factors are only changed within a predetermined range.

9. Method according to claim 7,
**characterized in that**
additionally at least one color information or one color temperature information is provided with respect to the data acquired by the image sensor,
wherein a first color information or color temperature information representing daylight, as well as a second color information or color temperature information representing artificial light, are preferably provided.

10. Method according to one of claims 7 to 9,
**characterized in that** the resolution of the image acquired by the image sensor is decreased and the optimization algorithm is implemented on the basis of the images with decreased resolution.

11. Method according to one of claims 7 to 10,
**characterized in that**
a plurality of images acquired by the image sensor (10) at different exposure stages, is combined to form an image with increased brightness dynamics, and the optimization algorithm is implemented on the basis of the images with increased brightness dynamics.

## Revendications

1. Unité de capteur (100) pour la détermination d'informations de contrôle, destinée à être utilisé dans une commande d'éclairage en fonction de la lumière du jour, comprenant :
un capteur d'image (10) pour la saisie d'informations d'images numériques et
un contrôleur (20) pour l'analyse des informations d'images et la création d'un signal de luminosité représentant la lumière du jour,
• le contrôleur (20) étant conçu pour mieux prendre en compte à l'aide de facteurs de pondération, lors de la création du signal de luminosité, les zones d'images des informations d'images relevées par le capteur d'image qui sont plus fortement influencées par la lumière du jour,
• le contrôleur (20) étant conçu pour détecter de manière autonome les zones d'images qui sont plus fortement influencées par la lumière du jour,
• pour la création du signal de luminosité, les informations de luminosité, plus particulièrement les valeurs de luminosité, des différentes zones d'images étant multipliées par un facteur de pondération et le contrôleur (20) étant conçu pour déterminer de manière autonome les facteurs de pondération pour les zones d'images dans le cadre d'un algorithme d'optimisation,
et, dans le cadre de l'algorithme d'optimisation, les informations de luminosité de deux images détectées successivement étant comparées entre elles,
**caractérisée en ce que**
i) le facteur de pondération correspondant à une zone d'image
a) est augmenté par le contrôleur (20) si la variation dans le temps de l'information de luminosité de cette zone d'image est similaire à la variation dans le temps de la luminosité totale de l'image,
b) est diminué par le contrôleur (20) si la variation dans le temps de l'information de luminosité de cette zone d'image n'est pas similaire à la variation dans le temps de la luminosité totale de l'image, ou
ii) le facteur de pondération correspondant à une zone d'image
a) est augmenté par le contrôleur (20) si l'information de luminosité de cette zone d'image n'est pas similaire à la variation dans le temps de la luminosité totale de l'image,
b) est diminué par le contrôleur (20) si l'information de luminosité de cette zone d'image est similaire à la variation dans le temps de la luminosité totale de l'image.

2. Unité de capteur selon la revendication 1,
**caractérisée en ce que**
les facteurs de pondération sont modifiés uniquement dans une plage, prédéterminée.

3. Unité de capteur selon l'une des revendications précédentes,
**caractérisée en ce que**
le contrôleur (20) est conçu pour mettre à disposition en plus au moins une information de couleur ou une information de température de couleur en ce qui concerne les données relevées par le capteur d'image.

4. Unité de capteur selon la revendication 3,
**caractérisée en ce que**
le contrôleur (20) est conçu pour mettre à disposition une première information de couleur ou information de température de couleur représentant la lumière du jour ainsi qu'une deuxième information de couleur ou information de température de couleur représentant la lumière artificielle.

5. Unité de capteur selon l'une des revendications précédentes,
**caractérisée en ce que**
le contrôleur (20) diminue la résolution de l'image détectée par le capteur d'image et exécute l'algorithme d'optimisation sur la base des images avec une résolution réduite.

6. Unité de capteur selon l'une des revendications précédentes,
**caractérisée en ce que**
le contrôleur (20) est conçu pour combiner plusieurs images relevées par le capteur d'image (10) à différents niveau d'éclairage en une image avec une dynamique de luminosité élevée et exécuter l'algorithme d'optimisation sur la base des images avec une dynamique de luminosité élevée.

7. Procédé de détermination d'informations de contrôle destiné à être utilisé dans une commande de lumière en fonction de la lumière du jour, comprenant les étapes suivantes :
saisie d'informations d'images numériques à l'aide d'un capteur d'image et
analyse des informations d'images et création d'un signal de luminosité représentant la lumière du jour,
• lors de la création du signal de luminosité, des zones d'images des informations d'images relevées par le capteur d'image qui sont plus fortement influencées par la lumière du jour, étant mieux prises en compte à l'aide de facteurs de pondération,
• pour la création du signal de luminosité, les informations de luminosité, plus particulièrement les valeurs de luminosité, des différentes zones d'images étant multipliées par un facteur de pondération et les facteurs de pondération pour les zones d'images étant optimisés dans le cadre d'un algorithme d'optimisation,
et, dans le cadre de l'algorithme d'optimisation, les informations de luminosité de deux images détectées successivement étant comparées entre elles,
**caractérisé en ce que**
i) le facteur de pondération correspondant à une zone d'image
a) est augmenté si la variation dans le temps de l'information de luminosité de cette zone d'image est similaire à la variation dans le temps de la luminosité totale de l'image,
b) est diminué si la variation dans le temps de l'information de luminosité de cette zone d'image n'est pas similaire à la variation dans le temps de la luminosité totale de l'image,
ou
ii) le facteur de pondération correspondant à une zone d'image
a) est augmenté si l'information de luminosité de cette zone d'image n'est pas similaire à la variation dans le temps de la luminosité totale de l'image,
b) est diminué si l'information de luminosité de cette zone d'image est similaire à la variation dans le temps de la luminosité totale de l'image.

8. Procédé selon la revendication 7,
**caractérisé en ce que**
les facteurs de pondération sont modifiés uniquement dans une plage prédéterminée.

9. Procédé selon la revendication 7 ou 8,
**caractérisé en ce que**
en outre au moins une information de couleur ou une information de température de couleur concernant les données relevées par le capteur d'image est mise à disposition,
de préférence une première information de couleur ou information de température de couleur représentant la lumière du jour et une deuxième information de couleur ou information de température de couleur représentant la lumière artificielle étant mises à disposition.

10. Procédé selon l'une des revendications 7 à 9,
**caractérisé en ce que**
la résolution de l'image saisie par le capteur d'image est réduite et l'algorithme d'optimisation est exécuté sur la base des images avec une résolution réduite.

11. Procédé selon l'une des revendications 7 à 10,
**caractérisé en ce que**
plusieurs images saisies par le capteur d'image (10) à différents niveaux d'éclairage sont combinées en une image avec une dynamique de luminosité élevée et l'algorithme d'optimisation est exécuté sur la base des images avec une dynamique de luminosité élevée.
